# EUROPEAN PATENT APPLICATION

(11) **EP 4 509 482 A1**
(43) Date of publication of application: **19.02.2025**
(21) Application number: 23193066.0
(22) Date of filing: 23.08.2023
(51) Int. Cl.: C04B 28/02, C04B 40/00

(54) **COMPOSITIONS COMPRISING POZZOLANS AND BRANCHED OLIGOMERS OF POLYOXYALKYLENE GLYCOL AND THEIR MIXTURES WITH GLYCOLS**

(30) Priority: 18.08.2023 PT 2023118874
(71) Applicant: Secil-Companhia Geral de Cal e Cimento S.A., 1070-100 Lisboa (PT)
(72) Inventor: JESUS DE CEQUEIRA SERRA NUNES, Angela Maria, SETÚBAL (PT); MATOS CORREIA, Diana Lara, SETÚBAL (PT); PIRES DOS SANTOS MATEUS, Maria Margarida, DAMAIA (PT)
(74) Representative: Pereira da Cruz, Joao

(57) **Abstract**

Compositions comprising from 80% to 97% weight per weight (w/w) of at least one pozzolan and from 1% to 10% (w/w), preferably from 1% to 6% (w/w) of an aqueous solution comprising at least one branched polyoxyalkylene glycol oligomer are disclosed. Composite materials comprising the compositions and methods for producing thereof are also disclosed.

## Description

### FIELD OF THE INVENTION

The present disclosure relates generally to pozzolans, and use thereof, e.g in cements and concrete.

### BACKGROUND OF THE INVENTION

Portland cement has its origin in natural resources, such as limestone and marl, and its production is a simple process in which most of the transformations are of a physical nature, through the reduction of fineness. The most complex stage, which involves slightly more complex solid-solid reactions, is clinkerization, which involves heating the raw materials at high temperatures, which is mainly responsible for energy consumption and atmospheric pollution.

In order to make the final product more sustainable, in recent years there has been a change in the cement manufacturing process, namely with the change in the cement production process to a dry process and also with the use of alternative fuels. However, the environmental impact generated continues to have some relevance, mainly with regard to the extraction of raw materials, consequent consumption of natural resources and CO₂ emissions.

Thus, there is currently a trend towards the production of cements with a lower content of clinker incorporation, which is partially replaced by additions such as limestone filler, blast furnace slag or pozzolans. Pozzolans are siliceous or silicoaluminous materials which have little or no cementitious properties, but which, when finely ground and in the presence of water, react at room temperature with dissolved calcium hydroxide to form calcium silicate and aluminate compounds. stable and with agglomerating power. These compounds can be of natural origin such as materials of volcanic origin, of artificial origin such as calcined clays and calcined metakaolins or byproducts of other industries such as fly ash.

The partial replacement of clinker by pozzolans, in addition to greater environmental sustainability, also gives the binder greater durability, greater resistance to chemical attack, lower permeability, less deformation and lower cost. When pozzolans react with the calcium hydroxide released during Portland cement hydration, they are also able to prevent the phenomenon of carbonation. However, the incorporation of pozzolans as a substitute for clinker has as main disadvantages the slower development of resistance and in some cases a greater absorption of water, which ends up limiting its incorporation content. Thus, there is a need to overcome some of these disadvantages in order to optimize the replacement of clinker by pozzolans for more environmentally and economically sustainable values.

Patent US4121945A discloses a method for the wet treatment of fly ash in which the metallic iron, carbon and cenospheres will be removed, thus enhancing the commercial value, the pozzolanic potential and also the fineness of the ash.

Patent US5714002A describes a method of reducing carbon from bimodal fly ash. This method is based on the separation of ash using vibrating sieves, forming two components, one rich in carbon and the other without carbon, the latter having a carbon content of at least 4% by weight and corresponding to at least 50% the weight of bimodal fly ash. The component formed without carbon will have greater pozzolanicity, thus optimizing its incorporation as an admixture in concrete.

Patent US6038987A describes that the flue ash (composed of siliceous ash particles and carbon particles) is subjected to a fragmentation to reduce the particle size followed by separation by gas flow. Fragmentation is carried out through an autogenous grinding method while separation is based on the difference in density between the siliceous ash particles and the carbon particles to carry out the classification.

Patent WO2011103371A2 refers to a method of modifying the chemical characteristics of pozzolans during their production. This method refers to the possibility of altering the chemical structure of pozzolans through the addition of supplementary materials, such as fly ash or slag, during production, these materials becoming chemical constituents of the pozzolan. In this way, it is possible to obtain the desired pozzolanic characteristics to acquire an optimal and adequate behavior when mixed with Portland cement.

Patent PT105631A discloses compositions of fine particulate binders used in construction, in the form of a mixture of dry or already pre-hydrated powders, comprising branched polyoxyalkylene glycol oligomers as a reducing agent of the dust emitted by the formulations of binders in the dry state or as a reducing agent of the segregation of inerts in formulations of pre-hydrated binders.

### SUMMARY OF THE INVENTION

In one aspect of the disclosure, there is provided a composition comprising from 80% to 97% weight per weight (w/w) of at least one pozzolan and from 1% to 10% (w/w), preferably from 1% to 6% (w/w) of an aqueous solution comprising at least one branched polyoxyalkylene glycol oligomer.

In some embodiments, the branched polyoxyalkylene glycol oligomer comprises a polyether polyol, hyperbranched polyether polyol, star-shaped polyether polyol, dendritic polyether polyols, hyperbranched polyester polyol, or any combination thereof, preferably a star-shaped polyether polyol.

In some embodiments, the branched polyoxyalkylene glycol oligomer has an average molecular weight from 300 g/mol to 8000 g/mol, preferably from 400 g/mol to 1500 g/mol, and a degree of branching from 3 to 8, preferably from 3 to 5.

In some embodiments, a concentration of the branched polyoxyalkylene glycol oligomer in the aqueous solution is from 1% to 60% (w/w), preferably from 4% to 25% (w/w).

In some embodiments, the aqueous solution further comprises at least one glycol, wherein the glycol comprises polyethylene glycol, propylene glycol, ethylene glycol, diethylene glycol, triethylene glycol or any combination thereof.

In another aspect of the disclosure, there is provided a composite material comprising from 30% to 55% (w/w) of the composition according to the present disclosure, and from 40 % (w/w) to 55% (w/w) of a cement.

In some embodiments, the composite material further comprises from 0.1% (w/w) to 2% (w/w) of a superplasticizer selected from poly(naphthalenesulfonate), poly(melaminesulfonate), lignosulfonate, polycarboxylate, sulfonated polymelamine, modified polycarboxylate ether, naphthalene, melamine, or any combination thereof, preferably poly(naphthalenesulfonate).

In some embodiments, the composite material further comprises from 1% to 20% of an additive selected from gypsum, limestone, or both.

In some embodiments, the composite comprises water, and a ratio of water/cement is from 0.5 to 0.7 (w/w), preferably 0.5 (w/w).

In another aspect of the disclosure, there is provided a method for obtaining a composition according to the present disclosure, the method comprising contacting at least one pozzolan with an aqueous solution comprising at least one branched polyoxyalkylene glycol oligomer at a concentration between 1% to 60% (w/w), thereby obtaining the composition, wherein the contacting comprises dispersing the aqueous solution in the at least one pozzolan.

In some embodiments, the contacting comprises stirring, high shear mixing, ultrasonication, overhead stirring, homogenizing, or any combination thereof.

In some embodiments, the aqueous solution comprises at least one branched polyoxyalkylene glycol oligomer and at least one glycol.

In some embodiments, the method further comprises a step of contacting the composition with a cement, and optionally, a superplasticizer, an additive, or both.

In another aspect of the disclosure, there is provided a use of the composition according to the present disclosure, in construction sector, ceramics, or any combination thereof, preferably in the manufacture of a ceramic product, element for draining rainwater and wastewater, sewage element, foundation element, and/or paving element selected from the group: block of pavement, curb or slab.

In another aspect of the disclosure, there is provided a use of the composite material according to the present disclosure, in construction sector, ceramics, or any combination thereof, preferably in the manufacture of a ceramic product, element for draining rainwater and wastewater, sewage element, foundation element, and/or paving element selected from the group: block of pavement, curb or slab.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

Further embodiments and the full scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### DETAILED DESCRIPTION OF THE INVENTION

According to some embodiments, the present disclosure is directed to a composition comprising at least one pozzolan and an aqueous solution comprising at least one branched polyoxyalkylene glycol oligomer.

As used herein, the terms "branched polyoxyalkylene glycol oligomer" and "branched polyether polyol" are used interchangeably and refer to an oligomer containing a polyoxyalkylene backbone (in particular polyoxyethylene, polyoxypropylene, polyoxybutylene and mixtures thereof) and terminated in polyethylene glycol or polypropylene glycol. They contain branching points in their molecular structure, which differentiates them from linear polyoxyalkylene glycols.

As used herein, the term "pozzolan" refers to a siliceous or siliceous and aluminous material which in itself possesses little or no cementitious value but will, in finely divided form and in the presence of moisture, chemically react with calcium hydroxide at ordinary temperatures to form compounds possessing cementitious properties. In some embodiments, a pozzolan comprises fly ash, slag, a natural pozzolan, or any combination thereof.

In some embodiments, pozzolans absorb water due to their intrinsic physical and chemical properties. The absorption of water by pozzolans influences their behavior, e.g., in concrete and other construction materials, affecting properties like workability, setting time, and long-term durability. The present disclosure is based, in part, on the finding that adding an aqueous solution comprising at least one branched polyoxyalkylene glycol oligomer to a pozzolan as a treatment, leads to a modification of chemical and physical characteristics of pozzolans thereby improving their workability, and suitability when to be incorporated into a cement, for e.g., concrete production.

The present disclosure is based, in part, on the finding that adding an aqueous solution comprising at least one branched polyoxyalkylene glycol oligomer to a pozzolan as a treatment, leads to a reduction in the water absorption of the pozzolans and therefore optimizes their dosage (increasing the amount) when used as cement replacement.

According to some embodiments, the present disclosure provides a composition comprising from 80% to 97% weight per weight (w/w) of at least one pozzolan and from 1% to 10% (w/w), preferably from 1% to 6% (w/w) of an aqueous solution comprising least one branched polyoxyalkylene glycol oligomer.

In some embodiments, the composition comprises from 80% to 95% (w/w) of at least one pozzolan. In some embodiments, the composition comprises from 80% to 92% (w/w), of at least one pozzolan. In some embodiments, the composition comprises from 1% to 8% (w/w) of an aqueous solution comprising least one branched polyoxyalkylene glycol oligomer. In some embodiments, the composition comprises from 1% to 6% (w/w) of an aqueous solution comprising least one branched polyoxyalkylene glycol oligomer.

In some embodiments, the branched polyoxyalkylene glycol oligomer comprises a polyether polyol, hyperbranched polyether polyol, star-shaped polyether polyol, dendritic polyether polyols, hyperbranched polyester polyol, or any combination thereof. In some embodiments, the branched polyoxyalkylene glycol oligomer comprises a star-shaped polyether polyol.

In some embodiments, the branched polyoxyalkylene glycol oligomer has an average molecular weight from 300 g/mol to 8000 g/mol. In some embodiments, the branched polyoxyalkylene glycol oligomer has an average molecular weight from 400 g/mol to 1500 g/mol.

In some embodiments, the branched polyoxyalkylene glycol oligomer has a degree of branching from 3 to 8. In some embodiments, the branched polyoxyalkylene glycol oligomer has a degree of branching from 3 to 5.

The present disclosure is based in part, on the finding that the molecular weight of the branched polyoxyalkylene glycol oligomer influences the water abortion of the pozzolan. The present disclosure is based in part, on the finding that a branched polyoxyalkylene glycol oligomer with the appropriate molecular weight and branching as described herein, is capable of surrounding a pozzolan, acting as a coating and making them less permeable, thereby decreasing the water absorption of the pozzolan.

In some embodiments, a concentration of the branched polyoxyalkylene glycol oligomer in the aqueous solution is from 1% to 60% (w/w). In some embodiments, a concentration of the branched polyoxyalkylene glycol oligomer in the aqueous solution is from 4% to 25% (w/w).

In some embodiments, the aqueous solution further comprises at least one glycol, wherein the glycol comprises polyethylene glycol, propylene glycol, ethylene glycol, diethylene glycol, triethylene glycol or any combination thereof.

According to some embodiments of the present disclosure, there is provided a use of the composition as described hereinabove, in construction sector, ceramics, or any combination thereof, preferably in the manufacture of a ceramic product, element for draining rainwater and wastewater, sewage element, foundation element, and/or paving element selected from the group: block of pavement, curb or slab.

According to some embodiments of the present disclosure, there is provided a composite material comprising from 30% to 55% (w/w) of the composition according to the present disclosure, and from 40 % (w/w) to 55% (w/w) of a cement. In some embodiments, the composite material is in the form of dry powder (dehydrated) or comprises water.

In some embodiments, a composite material as described herein is a mortar. In some embodiments, a composition as described hereinabove is a binder.

In some embodiments, the composite material further comprises from 0.1% (w/w) to 2% (w/w) of a superplasticizer. Non-limiting examples of superplasticizer according to the present disclosure include poly(naphthalenesulfonate), poly(melaminesulfonate), lignosulfonate, polycarboxylate, sulfonated polymelamine, modified polycarboxylate ether, naphthalene, melamine, or any combination thereof. In some embodiments, the superplasticizer comprises poly(naphthalenesulfonate).

As used herein, the term "superplasticizer" refers to a water-reducing agent. Superplasticizer are chemical admixtures used in concrete to improve workability without compromising its strength.

The present disclosure is based in part, on the finding that the modification of pozzolans with branched polyether polyol (compositions as described hereinabove) reduces the need for addition of superplasticizers when forming composite materials as described herein. Since the pre-treatment of pozzolans as described in the compositions described hereinabove improves their workability and leads to a reduction in water absorption, this resulting treated pozzolan (compositions described hereinabove) can be used requiring less amount of superplasticizer.

The present disclosure is based, in part, on the finding that incorporation of a treated pozzolan with the oligomer solution (composition as described hereinabove), leads to a reduction in the amount of water needed, and leads to an increase in consistency, with no apparent loss to the mechanical resistance obtained, as described in Table 1 and Table 2 in the example section.

In some embodiments, the composite material further comprises from 1% to 20% of an additive selected from gypsum, limestone, or both.

In some embodiments, the composite comprises water, and a ratio of water/cement is from 0.5 to 0.7 (w/w), preferably 0.5 (w/w).

According to some embodiments of the present disclosure, there is provided a use of the composite material as described hereinabove, in construction sector, ceramics, or any combination thereof, preferably in the manufacture of a ceramic product, element for draining rainwater and wastewater, sewage element, foundation element, and/or paving element selected from the group: block of pavement, curb or slab.

According to some embodiments of the present disclosure, there is provided a method for obtaining a composition according to the present disclosure. In some embodiments, the method comprises contacting at least one pozzolan with an aqueous solution comprising at least one branched polyoxyalkylene glycol oligomer at a concentration between 1% to 60% (w/w), thereby obtaining the composition, wherein the contacting comprises dispersing the aqueous solution in the at least one pozzolan.

In some embodiments, the contacting comprises stirring, high shear mixing, ultrasonication, overhead stirring, homogenizing, or any combination thereof.

In some embodiments, the aqueous solution comprises at least one branched polyoxyalkylene glycol oligomer and at least one glycol.

In some embodiments, the method further comprises a step of contacting the composition with a cement, and optionally, a superplasticizer, an additive, or both, thereby obtaining a composite material as described hereinabove.

As used herein the term "about" refers to ± 10 %.

The terms "comprises", "comprising", "includes", "including", "having" and their conjugates mean "including but not limited to".

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention.

Various embodiments and aspects of the present invention as delineated hereinabove and as claimed in the claims section below find experimental support in the following examples.

### EXAMPLES

Reference is now made to the following examples, which together with the above descriptions illustrate some embodiments of the disclosure in a non-limiting fashion.

### EXAMPLE 1

### BINDER COMPOSITIONS COMPRISING TREATED POZZOLANS

Some examples of binders comprising pozzolans treated with solutions of branched polyoxyalkylene glycol oligomers with a star structure and mixtures thereof with glycols (Polyethylene glycol, Propylene glycol), are presented below. Branched polyoxyalkylene glycol oligomers used according to the present disclosure are commercially available under the designation of branched polyether polyols. These examples are intended to better illustrate the disclosure in a non-limiting fashion.

The effect of treating pozzolans with oligomers and its incorporation in binder mixtures, was analyzed. Tests were carried and composite binders whose pozzolans were not treated with the aforementioned solutions were used as reference. The performance of composite binders was analyzed in terms of consistency vs. amount of water added for required consistency and mechanical strengths.

Table 1 presents the composition of a Binder 1, according to the present disclosure.

**Table 1. Composition of Binder 1**

| | Component | | % Weight |
|---|---|---|---|
| 1 | Portland cement type I 52.5R | | 49.8 |
| 2 | Treated pozzolan | | 49.8 |
| | | (9% oligomer solution | 4.8) |
| 3 | Poly(naphthalenesulfonate) based superplasticizer | | 0.4 |

Mortars were prepared with Binder 1, according to the procedure described in EN 196-1 for standardized mortars, except that in this case only the necessary amount of water was added to obtain the required consistency (spreading table method), determined by reference according to EN 1015-3.

The incorporation of the treated pozzolans with the oligomer solution, as described in Table 1, leads to a reduction of about 10% in the amount of water needed for a typical consistency of 160 mm, with no apparent damage to the mechanical resistance obtained (42.5 MPa).

Table 2 presents the composition of a Binder 2, according to the present disclosure.

**Table 2. Composition of Binder 2**

| | Component | | % Weight |
|---|---|---|---|
| 1 | Portland cement type I 42.5R | | 45.0 |
| 2 | Treated pozzolan | | 33.5 |
| | | (20% oligomer solution | 2.2) |
| 3 | other additives (gypsum 10%, limestone 10%) | | 20 |
| 4 | Poly(melaminesulfonate) based superplasticizer | | 1.5 |

Mortars were prepared with Binder 2, according to the procedure described in EN 196-1 for standardized mortars, except that in this case only the necessary amount of water was added to obtain the required consistency (spreading table method), determined by reference according to EN 1015-3.

The incorporation of the treated pozzolans with the oligomer solution, as described in Table 2, leads to a reduction of around 4% in in the amount of water needed, and leads to a 12% increase in consistency. At the mechanical level, there is no apparent loss in the mechanical resistance obtained in the binder after treatment.

### EXAMPLE 2

### MORTARS COMPRISING TREATED POZZOLANS

Further tests were made to evaluate the effect of adding polyol polyether as dispersants to the Pozzolans as a pre-treatment, before preparing the mortars. The workability of the mortars was evaluated, followed by their mechanical resistance. The tests were carried out for a constant water/cement (W/C) ratio of 0.5, in order to determine the influence of the various oligomers and respective amounts, on the consistency, fluidity and mechanical resistance of the prepared mixtures (Table 3). Mortar AR091 is the standard mortar of CEM I 52.5R, used as reference.

The addition of superplasticizer polynaphthalenesulfate type (SP-1) provided greater workability to the mixtures. The superplasticizer was used at 1% (w/w) (Mortar 1), 1.5% (w/w) (Mortar 2) and 0.4% (w/w) (Mortar 3) of the total mass of cement and Pozzolan. Accordingly, 0.4% was determined as the optimal amount.

**Table 3.**

| **ID** | **%CEM I 52,5R** | **50% Pozzolanic material treated with** | | **% SP1** | **Workability (mm)** | **Compressive Strength (MPa)** | | | **Pozzolanic activity index (%)** | | |
|---|---|---|---|---|---|---|---|---|---|---|---|
| | | **% PG-1** | **% PG-2** | | | **2 Days** | **7 Days** | **28 Days** | **2 Days** | **7 Days** | **28 Days** |
| Reference * | 100% | - | - | 1,0 | 185 | 37,3 | 54,3 | 66,9 | - | - | - |
| Mortar 1 | 50% | - | - | 1,0 | 139 | 12,3 | 22,7 | 39,3 | 35,7 | 44,4 | 63,8 |
| Mortar 2 | 50% | - | - | 1,5 | 179 | 11,4 | 22,5 | 40,0 | 33,0 | 44,0 | 64,5 |
| Mortar 3 | 50% | - | - | 0,4 | 136 | 7,2 | 18,2 | 30,4 | 20,9 | 35,6 | 49,0 |
| Mortar 4 | 50% | 0,5 | - | 0,4 | 141 | 6,4 | 17,4 | 29,6 | 18,6 | 34,1 | 47,7 |
| Mortar 5 | 50% | 1,0 | - | 0,4 | 160 | 5,3 | 17,6 | 31,2 | 15,4 | 34,4 | 50,3 |
| Mortar 6 | 50% | - | 0,5 | 0,4 | 143 | 5,5 | 16,5 | 28,7 | 15,9 | 32,4 | 46,3 |
| Mortar 7 | 50% | - | 1,0 | 0,4 | 144 | 4,9 | 16,4 | 29,2 | 14,2 | 32,2 | 47,1 |
| Mortar 8 | 50% | - | 1,5 | 0,4 | 156 | 5,2 | 17,0 | 29,8 | 15,1 | 33,3 | 48,1 |

| | | | | | | | | | | | |
|---|---|---|---|---|---|---|---|---|---|---|---|
| * Without pozzolanic materials SP1- 10% aqueous solution of superplasticizer polynaphthalenesulfate type. PG-1 - polyether molecular weight 500 g/mol PG-2 - polyester molecular weight 1000 g/mol | | | | | | | | | | | |

Regarding the workability of the samples, it was observed that the addition of the dispersant (PG-1, PG-2) had a positive contribution (increase of spreading for the same ratio W/C=0.5). The PG-2 dispersant showed to be the most effective in terms of rheology performance. The dispersant has an improved effect of surrounding the pozzolans, thereby making them less permeable. The effect associated is that less water is used in the mixing and the pozzolans have an improved workability.

Further tests were performed for mortars prepared with pre-treated pozzolans (Table 4).

**Table 4.**

| **ID** | **% SP2** | **%Pozzola nic material with 1% of PG-2** | **% Fille r** | **% Gypsum** | **Workab ility (mm)** | **Compressive Strength (MPa)** | | | **Pozzolanic activity index (%)** | | |
|---|---|---|---|---|---|---|---|---|---|---|---|
| | | | | | | **2 Day** | **7 Days** | **28 Days** | **2 Day** | **7 Days** | **28 Days** |
| Refere nce (CEM I 42,5R) * | - | - | - | - | 187 | 32,0 | 46,5 | 57,7 | - | - | - |
| Mortar 9 | 1,10 | 53,93 | - | - | 157 | 7,9 | 20,9 | 38,1 | 24,7 | 44,9 | 66,0 |
| Mortar 10 | 1,00 | 49,00 | 5 | - | 158 | 8,5 | 21,9 | 42,1 | 26,6 | 47,1 | 73,0 |
| Mortar 11 | 0,84 | 44,16 | 10 | - | 154 | 8,1 | 20,3 | 39,9 | 25,3 | 43,7 | 69,2 |
| Mortar 12 | 1,02 | 48,98 | - | 5 | 130 | 9,1 | 23,4 | 40,1 | 28,4 | 50,3 | 69,5 |
| Mortar 13 | 0,82 | 44,18 | - | 10 | 130 | 10,2 | 24,5 | 43,1 | 3,9 | 52,7 | 74,7 |
| Mortar 14 | 0,84 | 44,16 | 5 | 5 | 150 | 9,1 | 22,4 | 42,0 | 28,4 | 48,2 | 72,8 |
| Mortar 15 | 0,80 | 39,20 | 10 | 5 | 156 | 9,0 | 22,0 | 42,4 | 28,1 | 47,3 | 73,5 |
| Mortar 16 | 0,80 | 39,20 | 5 | 10 | 142 | 9,6 | 22,5 | 43,7 | 30,0 | 48,4 | 75,7 |
| Mortar 17 | 0,80 | 34,20 | 10 | 10 | 157 | 9,6 | 21,7 | 42,3 | 30,0 | 46,7 | 73,3 |

| | | | | | | | | | | | |
|---|---|---|---|---|---|---|---|---|---|---|---|
| * Without pozzolanic materials SP2- 20% aqueous solution of superplasticizer polymelaminassulphonate type. PG-1 - polyether molecular weight 500 g/mol PG-2 - polyether molecular weight 1000 g/mol | | | | | | | | | | | |

Modification of pozzolans with pretreatment with branched polyether polyol dispersants reduced the need for addition of superplasticizers.

Pre-treatment of pozzolan was carried out with polyether polyol PG-2 (dosage of PG-2 in weight of pozzolan). The preparation of the mortars was carried out for a W/C ratio of 0.5, with the addition of a superplasticizer (SP-2) until a spreading between 150 - 170 mm was obtained.

For the mortars presented in table 4, limestone filler was used as well as gypsum.

It was observed that the addition of gypsum lead to an increase in the activity index of about 3% for an amount of 5% of gypsum and about 7% for an amount of 10% of gypsum. In terms of workability, there was a reduction in the need for superplasticizer, however with a 30 mm lower spread (Mortar 9 compared to Mortar 12 and Mortar 13).

Regarding limestone filler, the increase in the amount incorporated resulted in a reduction in the need for superplasticizer to achieve identical workability. In terms of mechanical behavior, the incorporation of 10% filler was not beneficial, leading to reduction in the activity index when compared to the dosage of 5% filler (Mortar 11 vs. Mortar 12). In order to optimize the performance of incorporation of gypsum and limestone filler, tests were carried out with combinations of incorporation of these compounds (Mortar 14 to Mortar 17), showing at a global level (resistance and workability) that the incorporation of 10% of gypsum and 10% filler was the most favorable mix (Mortar 17). The addition of filler reduced water absorption and helped maintain rheology, and the addition of gypsum resulted in an increase in the concentration of calcium hydroxide in the reaction medium, which optimized the occurrence of the pozzolanic reaction.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

## Claims

1. Composition comprising from 80% to 97% weight per weight (w/w) of at least one pozzolan and from 1% to 10% (w/w), preferably from 1% to 6% (w/w) of an aqueous solution comprising at least one branched polyoxyalkylene glycol oligomer.

2. Composition according to claim 1, wherein said branched polyoxyalkylene glycol oligomer comprises a polyether polyol, hyperbranched polyether polyol, star-shaped polyether polyol, dendritic polyether polyols, hyperbranched polyester polyol, or any combination thereof, preferably a star-shaped polyether polyol.

3. Composition according to any one of claims 1 to 2, wherein said branched polyoxyalkylene glycol oligomer has an average molecular weight from 300 g/mol to 8000 g/mol, preferably from 400 g/mol to 1500 g/mol, and a degree of branching from 3 to 8, preferably from 3 to 5.

4. Composition according to any one of claims 1 to 3, wherein a concentration of said branched polyoxyalkylene glycol oligomer in said aqueous solution is from 1% to 60% (w/w), preferably from 4% to 25% (w/w).

5. Composition according to any one of claims 1 to 4, wherein said aqueous solution further comprises at least one glycol, wherein said glycol comprises polyethylene glycol, propylene glycol, ethylene glycol, diethylene glycol, triethylene glycol or any combination thereof.

6. Composite material comprising from 30% to 55% (w/w) of the composition according to any one of claims 1 to 5, and from 40 % (w/w) to 55% (w/w) of a cement.

7. Composite material according to claim 6, further comprising from 0.1% (w/w) to 2% (w/w) of a superplasticizer selected from poly(naphthalenesulfonate), poly(melaminesulfonate), lignosulfonate, polycarboxylate, sulfonated polymelamine, modified polycarboxylate ether, naphthalene, melamine, or any combination thereof, preferably poly(naphthalenesulfonate).

8. Composite material according to any one of claims 6 to 7, further comprising from 1% to 20% of an additive selected from gypsum, limestone, or both.

9. Composite material according to any one of claims 6 to 8, wherein said composite comprises water, and a ratio of water/cement is from 0.5 to 0.7 (w/w), preferably 0.5 (w/w).

10. Method for obtaining a composition according to any one of claims 1 to 5, the method comprising contacting at least one pozzolan with an aqueous solution comprising at least one branched polyoxyalkylene glycol oligomer at a concentration between 1% to 60% (w/w), thereby obtaining said composition, wherein said contacting comprises dispersing the aqueous solution in the at least one pozzolan.

11. Method according to claim 10, wherein said contacting comprises stirring, high shear mixing, ultrasonication, overhead stirring, homogenizing, or any combination thereof.

12. Method according to any one of claims 10 to 11, wherein said aqueous solution comprises at least one branched polyoxyalkylene glycol oligomer and at least one glycol.

13. Method according to any one of claims 10 to 12, further comprising a step of contacting said composition with a cement, and optionally, a superplasticizer, an additive, or both.

14. Use of the composition according to any one of claims 1 to 5, in construction sector, ceramics, or any combination thereof, preferably in the manufacture of a ceramic product, element for draining rainwater and wastewater, sewage element, foundation element, and/or paving element selected from the group: block of pavement, curb or slab.

15. Use of the composite material according to any one of claims 6 to 9, in construction sector, ceramics, or any combination thereof, preferably in the manufacture of a ceramic product, element for draining rainwater and wastewater, sewage element, foundation element, and/or paving element selected from the group: block of pavement, curb or slab.
